# EUROPÄISCHE PATENTSCHRIFT

(11) **EP 3 432 315 B1**
(45) Veröffentlichungstag und Bekanntmachung des Hinweises auf die Patenterteilung: **08.09.2021**
(21) Anmeldenummer: 18181412.0
(22) Anmeldetag: 03.07.2018
(51) Int. Cl.: C04B 28/04, C04B 111/00, G21F 1/04, G21F 9/30

(54) **BETONZUSAMMENSETZUNG UND VERFAHREN ZUM HERSTELLEN EINER SOLCHEN BETONZUSAMMENSETZUNG**
CONCRETE COMPOSITION AND METHOD FOR PRODUCING SAME
COMPOSITION DE BÉTON ET PROCÉDÉ DE FABRICATION D'UNE TELLE COMPOSITION

(30) Priorität: 20.07.2017 DE 102017006902
(43) Veröffentlichungstag der Anmeldung: 23.01.2019
(73) Patentinhaber: Theodor Pieper GmbH & Co. KG, 57392 Schmallenberg (DE)
(72) Erfinder: PIEPER, Reinhold, 57392 Schmallenberg-Dorlar (DE); KETTLER, John, 52459 Inden (DE); HAVENITH, Andreas, 52222 Stolberg (Rhld.) (DE)
(74) Vertreter: Zeitler Volpert Kandlbinder Patentanwälte Partnerschaft mbB

(56) Entgegenhaltungen:
- EP-A1- 1 580 175
- CH-B1- 698 623
- DE-T2- 69 609 144
- US-B2- 6 630 683

## Beschreibung

Die Erfindung betrifft eine Betonzusammensetzung zur Abschirmung ionisierender Strahlung, wie Neutronenstrahlung, nach dem Patentanspruch 1 sowie ein Verfahren zum Herstellen einer solchen Betonzusammensetzung nach dem Oberbegriff des Patentanspruchs 8.

Gegen ionisierende Strahlung, wie zum Beispiel Gamma- oder Neutronenstrahlung, sind Abschirmmaßnahmen erforderlich.

Bei der Abschirmung von Gamma-Strahlung ist die Leistungsfähigkeit eines Abschirmmaterials in erster Näherung von der Dichte des Materials abhängig. Die Materialdicke, bei der ein Material die Gamma-Strahlung auf die Hälfte reduziert, wird Halbwertsschichtdicke genannt. Die Halbwertsschichtdicke kann für den Vergleich verschiedener Abschirmmaterialien genutzt werden.

Neutronenstrahlen wirken ähnlich wie Gamma- und Röntgenstrahlen schädlich auf Organismen. Derartige Strahlen ionisieren zwar nicht direkt, setzen aber aus chemisch gebundenen Wasserstoff-Atomen Protonen frei, die ihrerseits ionisierend und damit zerstörend wirken. Auf der anderen Seite ist auch die Heilwirkung der Neutronenstrahlung in der Krebstherapie bekannt. Hier werden Neutronen zur Therapie bestimmter Karzinomarten eingesetzt, die sich beispielsweise als resistent gegenüber Röntgenstrahlen erwiesen haben. Weitere Anwendung finden Neutronen in der Kernphysik, der Neutronenbeugung wie auch in der Radiographie zum Dotieren und zum Herstellen von Halbleitern. Ein weiteres Anwendungsfeld der Neutronen liegt in der Neutronenaktivierungsanalyse. Auch bei kunsthistorischen Untersuchungen können Neutronen zur Aufdeckung von Fälschungen Anwendung finden.

Unter Abschirmung werden in der Kerntechnik Schutzmaßnahmen gegen ionisierende Strahlung verstanden. Die Abschirmung von Neutronen ist ebenfalls materialabhängig, sie korreliert jedoch nicht mit der Dichte. Neutronen können als ungeladene Teilchen Masse durchdringen und werden auf atomarer Ebene nur durch den Atomkern und nicht durch die Elektronenhülle beeinflusst. Unter anderem können gegen Neutronenstrahlung Wasserstoff-haltige Substanzen, wie zum Beispiel Wasser, für die Abschirmung verwendet werden, wobei die bei der Absorption der Neutronen entstehende Gammastrahlung eine weitere Abschirmung erfordern kann.

Die Eigenschaft eines chemischen Elements, Neutronen einzufangen, wird durch den sogenannten Einfangquerschnitt ausgedrückt. Der Einfangquerschnitt kann als Wahrscheinlichkeit verstanden werden, mit der ein chemisches Element Neutronen absorbiert. Insgesamt gelangen als Abschirmung gegenüber Neutronenstrahlung Stoffe mit großem Neutronen-Einfangquerschnitt, wie Seltenerdmetalle, Cadmium, Gold, Silber, Bor und Lithium, vorzugsweise zur Anwendung. Insofern ist das chemische Element Bor als Neutronenabsorptionsmittel bekannt.

Es sind in der Praxis vielfältige Betonzusammensetzungen wie zum Beispiel aus der CH 698623, US 6 630 683, DE 69 609 144 oder EP 1 580 175 bekannt, die entweder die geforderte Abschirmungswirkung gegen ionisierende Strahlung, wie Neutronenstrahlung, nicht in hinreichendem Maße entfalten oder keine hinreichenden mechanischen Eigenschaften, wie zum Beispiel geforderte Druckfestigkeiten, erreichen.

Der Erfindung liegt die Aufgabe zugrunde, eine Betonzusammensetzung der eingangs erwähnten Art zu schaffen, die einerseits ionisierende Strahlung, wie Neutronenstrahlung, abschirmen kann und andererseits eine hohe Druckfestigkeit aufweist. Ferner liegt der Erfindung die Aufgabe zu Grunde, ein Verfahren zum Herstellen einer solchen Zusammensetzung anzugeben.

Diese Aufgabe wird einerseits durch eine Betonzusammensetzung mit den Merkmalen des Patentanspruchs 1, andererseits durch ein Verfahren mit den Merkmalen des Patentanspruchs 8 gelöst. Vorteilhafte Ausgestaltungen der Erfindung sind in den jeweils abhängigen Ansprüchen beschrieben.

Erfindungsgemäß enthält die Betonzusammensetzung Sand, Splitt, Zement, Wasser, Colemanit, einen Betonverflüssiger und einen Erhärtungsbeschleuniger. Colemanit, Ca [B₃O₄(OH)₃] · H₂O, stellt ein wichtiges Borat-Mineral dar und ist in Verbindung mit den weiteren Inhaltsstoffen und Bestandteilen der erfindungsgemäßen Betonzusammensetzung besonders gut als Abschirmmittel gegen und Absorptionsmittel für Neutronenstrahlung geeignet. Colemanit enthält einen sehr hohen Anteil an Bor, kann bergmännisch gewonnen und somit als kostengünstiger Rohstoff bezogen werden. Es dient üblicherweise als Ausgangsstoff zur Borsäureherstellung, erhöht als Zusatz bei der Herstellung von Glas die Hitzeresistenz des Produktes und wird beispielsweise zur Glasur von Keramik verwendet. Der Betonverflüssiger ist ein Betonzusatzmittel, welches die Verarbeitbarkeit des Betons verbessern oder den jeweiligen Wassergehalt des Betons verringern soll. Der Erhärtungsbeschleuniger besteht aus synthetisch produzierten Kristallkeimen in einer wässrigen Dispersion, die die Frühfestigkeitsentwicklung von Beton in einem zeitlichen Rahmen von 6 bis 12 Stunden deutlich beschleunigt. Dabei wird das Wachstum der für die Frühfestigkeitsentwicklung wichtigen Calcium-Silikat-Hydrat-Kristalle stark beschleunigt. Eine solche Betonzusammensetzung ist in der Lage, die vorerwähnte ionisierende Strahlung, wie Neutronenstrahlung, gut zu absorbieren und gleichwohl eine hohe Druckfestigkeit aufzuweisen, wie nachfolgend noch erläutert wird.

Gemäß einer Weiterbildung ist der Sand Wesersand, vorzugsweise mit einer Körnung von 0 bis 2 mm. Ein solcher Sand ist auf dem Markt gut verfügbar und daher preiswert zu beschaffen.

Vorteilhafterweise ist der Splitt Diabas Splitt. Ein solcher Splitt hat sich für die Betonherstellung als vorteilhaft erwiesen, da der mit einem solchen Splitt hergestellte Frischbeton einerseits gut zu verarbeiten ist, andererseits gute Festigkeitseigenschaften aufweisen kann.

Gemäß einer bevorzugten Weiterbildung liegt der Splitt in zwei verschiedenen Körnungen, vorzugsweise einer ersten Körnung von 2 bis 8 mm und einer zweiten Körnung von 8 bis 16 mm, oder in drei verschiedenen Körnungen, vorzugsweise einer ersten Körnung von 2 bis 4 mm, einer zweiten Körnung von 4 bis 8 mm und einer dritten Körnung von 8 bis 16 mm, vor. Derartige Körnungen verleihen dem Beton gute mechanische Eigenschaften, insbesondere hohe Druckfestigkeiten.

Gemäß der Erfindung hat die Betonzusammensetzung folgende jeweils auf einen m³ Frischbeton bezogene Bereichsangaben in Gewichtsanteilen:

| | |
|---|---|
| Sand | 20 bis 32 Gew.-% |
| Splitt | 46 bis 58 Gew.-% |
| Zement | 12 bis 20 Gew.-% |
| Wasser | 3 bis 6 Gew.-% |
| Colemanit | 0,45 bis 0,9 Gew.-% |
| Betonverflüssiger | 0,05 bis 0,09 Gew.-% |
| Erhärtungsbeschleuniger | 0,4 bis 1,1 Gew.-%. |

Eine solche Betonzusammensetzung ist besonders gut zur Neutronenabsorption geeignet. Sie weist ferner gute Festigkeitseigenschaften auf, welche mindestens den Druckfestigkeitsklassen C35/45 bzw. C 45/55 entsprechen.

Gemäß einer anderen Weiterbildung hat die Betonzusammensetzung folgende jeweils auf einen m³ Frischbeton bezogene Bereichsangaben für den in unterschiedlichen Körnungen vorliegenden Splitt in Gewichtsanteilen:

| | |
|---|---|
| Diabas Splitt Körnung 2 bis 4 mm | 9 bis 13 Gew.-% |
| | |
| Diabas Splitt Körnung 4 bis 8 mm | 9 bis 13 Gew.-% |
| | |
| Diabas Splitt Körnung 8 bis 16 mm | 28 bis 32 Gew.-%. |

Ein Einhalten derartiger Sieblinien gewährleistet hohe Druckfestigkeiten der Betonzusammensetzung. Damit ist eine derartige Betonzusammensetzung in der Lage, Neutronenstrahlung zu absorbieren und gleichzeitig eine hohe Druckfestigkeit aufzuweisen.

Vorteilhafterweise hat die Betonzusammensetzung folgende jeweils auf einen m³ Frischbeton bezogene Bestandteile:

| | |
|---|---|
| Wesersand | 29,01 Gew.-% |
| | |
| Diabas Splitt Körnung 2 bis 4 mm | 10,09 Gew.-% |
| | |
| Diabas Splitt Körnung 4 bis 8 mm | 10,63 Gew.-% |
| | |
| Diabas Splitt Körnung 8 bis 16 mm | 29,33 Gew.-% |
| | |
| Zement | 14,86 Gew.-% |
| | |
| Wasser | 4,69 Gew.-% |
| | |
| Colemanit | 0,78 Gew.-% |
| | |
| Betonverflüssiger | 0,06 Gew.-% |
| | |
| Erhärtungsbeschleuniger | 0,55 Gew.-%. |

Diese Betonzusammensetzung weist eine gute Abschirmwirkung in Bezug auf Neutronenstrahlung auf und erfüllt die Druckfestigkeitsklasse C35/45 mit einer charakteristischen Mindestdruckfestigkeit von Zylindern von 35 N/mm² und einer charakteristischen Mindestdruckfestigkeit von Würfeln von 45 N/mm².

Gemäß einer anderen Weiterbildung hat die Betonzusammensetzung folgende jeweils auf einen m³ Frischbeton bezogene Bestandteile:

| | |
|---|---|
| Wesersand | 22,93 Gew.-% |
| | |
| Diabas Splitt Körnung 2 bis 4 mm | 11,47 Gew.-% |
| | |
| Diabas Splitt Körnung 4 bis 8 mm | 11,47 Gew.-% |
| | |
| Diabas Splitt Körnung 8 bis 16 mm | 30,58 Gew.-% |
| | |
| Zement | 18,17 Gew.-% |
| | |
| Wasser | 3,78 Gew.-% |
| | |
| Colemanit | 0,57 Gew.-% |
| | |
| Betonverflüssiger | 0,08 Gew.-% |
| | |
| Erhärtungsbeschleuniger | 0,95 Gew.-%. |

Diese Betonzusammensetzung weist eine gute Abschirmwirkung in Bezug auf Neutronenstrahlung auf und erfüllt die Druckfestigkeitsklasse C45/55 mit einer charakteristischen Mindestdruckfestigkeit von Zylindern von 45 N/mm² und einer charakteristischen Mindestdruckfestigkeit von Würfeln von 55 N/mm².

Vorteilhafterweise weist das Verfahren zum Herstellen einer Betonzusammensetzung folgende Schritte auf:
(a) Mischen von Sand, Splitt und Colemanit;
(b) Zugeben von Zement zu dem Gemisch gemäß Schritt (a); Mischen der Komponenten;
(c) Zugeben von Wasser und Betonverflüssiger zu dem Gemisch gemäß Schritt (b); Mischen der Komponenten;
(d) Zugeben von Erhärtungsbeschleuniger zu dem Gemisch gemäß Schritt (c); Mischen der Komponenten;
(e) sofortiges Verarbeiten des Gemisches gemäß Schritt (d).

Mit diesen Verfahrensschritten ist es möglich, eine Betonzusammensetzung herzustellen, die Neutronenstrahlung abschirmen kann und gleichzeitig eine hohe Druckfestigkeit aufweist.

Gemäß einer anderen Weiterbildung beträgt die Mischzeit gemäß Schritt (a) etwa eine Minute und vorzugsweise die Mischzeit gemäß Schritt (b) etwa 1 bis 2 Minuten, die Mischzeit gemäß Schritt (c) etwa eine Minute und die Mischzeit gemäß Schritt (d) etwa 2 bis 3 Minuten. Es ist klar, dass das Mischen der einzelnen Bestandteile bzw. Komponenten in den Schritten (a) und (b) ein sogenanntes Trockenmischen ist, während das Mischen der einzelnen Bestandteile bzw. Komponenten in den Schritten (c) und (d) ein sogenanntes Feuchtmischen ist. Ein Einhalten derartiger Mischzeiten gewährleistet die Herstellung eines verarbeitbaren Frischbetons, welcher nachfolgend beispielsweise zu Blöcken oder Platten weiterverarbeitet, insbesondere gegossen werden kann.

Gemäß einer vorteilhaften Weiterbildung erfolgt im Schritt (c) das Zugeben von Wasser gleichzeitig mit dem Zugeben von Betonverflüssiger und beträgt die Wasserzugabe etwa 3 Minuten. Damit ist auf der einen Seite ein zügiges Herstellen der Betonzusammensetzung, auf der anderen Seite sichergestellt, dass der Frischbeton nach dem Mischen in Schritt (d) nicht fließfähig ist. Der Frischbeton kann und sollte sofort verarbeitet werden.

Ausführungsbeispiele des Erfindungsgegenstandes werden nachfolgend näher erläutert, wobei alle beschriebenen Merkmale für sich oder in beliebiger Kombination den Gegenstand der vorliegenden Erfindung unabhängig von ihrer Zusammenfassung in den Ansprüchen oder deren Rückbeziehung bilden.

Die erfindungsgemäße Betonzusammensetzung zur Abschirmung ionisierender Strahlung, wie Neutronenstrahlung, enthält Sand, Splitt, Zement, Wasser, Colemanit, einen Betonverflüssiger und einen Erhärtungsbeschleuniger.

Der Sand ist gemäß einer bevorzugten Ausführungsform Wesersand vorzugsweise mit einer Körnung von 0 bis 2 mm. Der Splitt ist gemäß einer bevorzugten Ausführungsform Diabas Splitt, welcher in zwei verschiedenen Körnungen, vorzugsweise einer ersten Körnung von 2 bis 8 mm und einer zweiten Körnung von 8 bis 16 mm, oder in drei verschiedenen Körnungen, vorzugsweise einer ersten Körnung von 2 bis 4 mm, einer zweiten Körnung von 4 bis 8 mm und einer dritten Körnung von 8 bis 16 mm, vorliegt.

Der Zement ist gemäß einer bevorzugten Ausführungsform ein Wittekind Portlandkalksteinzement mit der Bezeichnung CEM II/A-LL 52,5 N. Ein derartiger Zement kann bezogen werden bei dem Portlandzementwerk Wittekind Hugo Miebach Söhne KG, Hüchtchenweg 1, 59597 Erwitte, Deutschland. Der vorerwähnte Portlandkalksteinzement ist ein anorganisches, fein gemahlenes, hydraulisches Bindemittel für Mörtel und Beton. Bei Zugabe von Wasser erhärtet der sich bildende Zementleim durch Hydratation zu wasser- und raumbeständigem Zementstein. Dieser Zement ist aus dem Hauptbestandteil Portlandzementklinker und Kalkstein, aus Calciumsulfat sowie Nebenbestandteilen zusammengesetzt. Portlandzementklinker ist ein hydraulischer Stoff, der im Wesentlichen aus Calciumsilikaten besteht. Ein solcher Klinker wird durch Malen und Brennen der Rohstoffe Kalkstein oder Kreide und Ton hergestellt. Gemahlener Kalkstein verbessert die Korngrößenverteilung des Zements im feinen Bereich. Zur Regelung des Erstarrens wird dem Zement Calciumsulfat zugegeben. Gemäß der vorerwähnten Normbezeichnung hat dieser Zement die Festigkeitsklasse 52,5.

Es hat sich als vorteilhaft herausgestellt, einen Borgehalt von mindestens 800 ppm im Beton vorzusehen. Vorteilhafterweise beträgt der Borgehalt im Beton 1000 ppm, was durch die Zugabe von etwa 20 kg Colemanit pro m³ Beton erreicht wird. Besonders vorteilhaft weist das Colemanit eine möglichst feine Körnung von beispielsweise 75 µm oder 200 mesh auf. Das Colemanit kann beispielsweise bei der Firma Alroko GmbH und Co. KG, Borsteler Chaussee 55, 22453 Hamburg, bezogen werden.

Der Betonverflüssiger ist beispielsweise das Produkt MasterGlenium SKY 641, zu beziehen über die Firma BASF Construction Solutions GmbH, 83308 Trostberg, Deutschland. Der Erhärtungsbeschleuniger ist beispielsweise das Produkt Master X-Seed 100, ebenfalls zu beziehen über die vorgenannte Firma BASF Construction Solutions GmbH in Trostberg, Deutschland.

Gemäß der Erfindung hat die Betonzusammensetzung folgende jeweils auf einen m³ Frischbeton bezogene Bereichsangaben in Gewichtsanteilen:

| | |
|---|---|
| Sand | 20 bis 32 Gew.-% |
| Splitt | 46 bis 58 Gew.-% |
| Zement | 12 bis 20 Gew.-% |
| Wasser | 3 bis 6 Gew.-% |
| Colemanit | 0,45 bis 0,9 Gew.-% |
| Betonverflüssiger | 0,05 bis 0,09 Gew.-% |
| Erhärtungsbeschleuniger | 0,4 bis 1,1 Gew.-%. |

In der vorgenannten Zusammensetzung kann der Diabas Splitt gemäß einer bevorzugten Ausführungsform bezogen auf einen m³ Frischbeton bezogene Bereichsangaben in unterschiedlichen Körnungen wie folgt vorliegen:

**Diabas Splitt**

| | |
|---|---|
| Körnung 2 bis 4 mm | 9 bis 13 Gew.-% |
| Diabas Splitt Körnung 4 bis 8 mm | 9 bis 13 Gew.-% |
| Diabas Splitt Körnung 8 bis 16 mm | 28 bis 32 Gew.-%. |

Gemäß einer besonders bevorzugten Ausführungsform hat die Betonzusammensetzung folgende jeweils auf einen m³ Frischbeton bezogene Bestandteile, wobei diese Zusammensetzung die Festigkeitsklasse C 35/45 erfüllt:

| | |
|---|---|
| Wesersand | 29,01 Gew.-% |
| Diabas Splitt Körnung 2 bis 4 mm | 10,09 Gew.-% |
| Diabas Splitt Körnung 4 bis 8 mm | 10,63 Gew.-% |
| Diabas Splitt Körnung 8 bis 16 mm | 29,33 Gew.-% |
| Zement | 14,86 Gew.-% |
| Wasser | 4,69 Gew.-% |
| Colemanit | 0,78 Gew.-% |
| Betonverflüssiger | 0,06 Gew.-% |
| Erhärtungsbeschleuniger | 0,55 Gew.-%. |

Beispielsweise kann eine Gesamtmenge an Frischbeton von 2.557,50 kg gemäß der vorerwähnten Zusammensetzung 742 kg Wesersand, 258 kg Diabas Splitt mit einer

Körnung von 2 bis 4 mm, 272 kg Diabas Splitt mit einer Körnung von 4 bis 8 mm, 750 kg Diabas Splitt mit einer Körnung von 8 bis 16 mm, 380 kg Zement, 120 kg Wasser, 20 kg Colemanit, 1,5 kg Betonverflüssiger und 14 kg Erhärtungsbeschleuniger enthalten.

Gemäß einer anderen besonders bevorzugten Ausführungsform der Erfindung hat die Betonzusammensetzung folgende jeweils auf 1 m Frischbeton bezogene Bestandteile, wobei diese Zusammensetzung die Festigkeitsklasse, auch Betongüte genannt, C 45/55 erfüllt:

| | |
|---|---|
| Wesersand | 22,93 Gew.-% |
| Diabas Splitt Körnung 2 bis 4 mm | 11,47 Gew.-% |
| Diabas Splitt Körnung 4 bis 8 mm | 11,47 Gew.-% |
| Diabas Splitt Körnung 8 bis 16 mm | 30,58 Gew.-% |
| Zement | 18,17 Gew.-% |
| Wasser | 3,78 Gew.-% |
| Colemanit | 0,57 Gew.-% |
| Betonverflüssiger | 0,08 Gew.-% |
| Erhärtungsbeschleuniger | 0,95 Gew.-%. |

Beispielsweise kann eine Gesamtmenge an Frischbeton von 2642 kg gemäß der letztgenannten Zusammensetzung 606 kg Wesersand, 303 kg Diabas Splitt mit einer Körnung von 2 bis 4 mm, 303 kg Diabas Splitt mit einer Körnung von 4 bis 8 mm, 808 kg Diabas Splitt mit einer Körnung von 8 bis 16 mm, 480 kg Zement, 100 kg Wasser, 15 kg Colemanit, 2 kg Betonverflüssiger und 25 kg Erhärtungsbeschleuniger enthalten.

Prüfungen nach DIN EN 12390-3/7 haben ergeben, dass die Druckfestigkeit der vorerwähnten Betonzusammensetzung zwischen 65,5 und 77,6 N/mm² mit einem gemittelten Wert von 68,8 N/mm² beträgt.

Das erfindungsgemäße Verfahren zum Herstellen einer vorerwähnten Betonzusammensetzung weist folgende Schritte auf:
(a) Mischen von Sand, Splitt und Colemanit;
(b) Zugeben von Zement zu dem Gemisch gemäß Schritt (a); Mischen der Komponenten;
(c) Zugeben von Wasser und Betonverflüssiger zu dem Gemisch gemäß Schritt (b); Mischen der Komponenten;
(d) Zugeben von Erhärtungsbeschleuniger zu dem Gemisch gemäß Schritt (c); Mischen der Komponenten;
(e) sofortiges Verarbeiten des Gemisches gemäß Schritt (d).

Dabei beträgt die Mischzeit gemäß Schritt (a) etwa eine Minute. Gemäß einer bevorzugten Ausführungsform der Erfindung beträgt die Mischzeit gemäß Schritt (b) etwa 1 bis 2 Minuten, die Mischzeit gemäß Schritt (c) etwa eine Minute und die Mischzeit gemäß Schritt (d) etwa 2 bis 3 Minuten.

Das vorerwähnte Mischen in den einzelnen Schritten kann beispielsweise in einem Betonzwangsmischer erfolgen. Das Mischen im Schritt (a) ist ein Trockenmischen und dient dazu, eine möglichst homogene Verteilung des Colemanit in dem Beton zu gewährleisten und eine Klumpenbildung des Colemanits im Beton zu vermeiden. Ebenso ist das Mischen im Schritt (b) ein Trockenmischen.

Im Schritt (c) erfolgt das Zugeben von Wasser gemäß einer bevorzugten Ausführungsform der Erfindung gleichzeitig mit dem Zugeben von Betonverflüssiger. Das Mischen im Schritt (c) erfolgt in den Konsistenzklassen, auch Feuchtigkeitsklassen genannt, F3 bis F4, d.h. im Bereich eines elastischen bis weichen Betons. Ein solcher Beton ist beispielsweise stark erdfeucht. Die Wasserzugabe im Schritt (c) beträgt etwa 3 Minuten. Das Mischen im Schritt (c) ist ein sogenanntes Feuchtmischen. Wie zuvor erwähnt beträgt die Feuchtmischzeit in diesem Schritt etwa eine Minute.

Nach der letztgenannten Feuchtmischzeit wird dann im Schritt (d), wie zuvor erwähnt, der Erhärtungsbeschleuniger zugegeben. Die weitere Mischzeit beträgt dann, wie ebenfalls zuvor erwähnt, 2 bis 3 Minuten. Das Mischen im Schritt (d) erfolgt in den Konsistenzklassen F4 bis F5, d.h. im Bereich eines weichen bis sehr weichen Betons. Es ist darauf zu achten, dass der Beton am Ende des Schrittes (d) nicht fließfähig ist und dass das fertige Frischbetongemisch sofort verarbeitet wird.

Versuche mit einem erfindungsgemäß hergestellten Beton enthaltend einen Borgehalt von etwa 800 bis 1120 ppm (1120 mg/kg) und im Vergleich dazu einem unborierten Standardbeton haben ergeben, dass bei Verwendung des erfindungsgemäßen Betons die Neutronenstrahlung in Bezug auf thermische Neutronen bei einer Betondicke von 10 cm um eine knappe Größenordnung, nämlich um den Faktor 9,4 reduziert wurde. Damit ist die erfindungsgemäße Betonzusammensetzung in der Lage, Neutronenstrahlung in beträchtlichem Umfang zu absorbieren. Sie kann daher als wirksame Abschirmmaßnahme angesehen werden.

Damit ist eine Betonzusammensetzung angegeben, die einerseits Neutronenstrahlung abschirmen kann, andererseits eine hohe Druckfestigkeit aufweist. Ferner ist damit auch ein Verfahren zum Herstellen einer solchen Betonzusammensetzung angegeben.

## Patentansprüche

1. Betonzusammensetzung zur Abschirmung ionisierender Strahlung, wie Neutronenstrahlung, enthaltend Sand, Splitt, Zement, Wasser, Colemanit, einen Betonverflüssiger und einen Erhärtungsbeschleuniger,
mit folgenden jeweils auf einen m³ Frischbeton bezogenen Bereichsangaben in Gewichtsanteilen:
| | |
|---|---|
| Sand | 20 bis 32 Gew.-% |
| Splitt | 46 bis 58 Gew.-% |
| Zement | 12 bis 20 Gew.-% |
| Wasser | 3 bis 6 Gew.-% |
| Colemanit | 0,45 bis 0,9 Gew.-% |
| Betonverflüssiger | 0,05 bis 0,09 Gew.-% |
| Erhärtungsbeschleuniger | 0,4 bis 1,1 Gew.-%. |

2. Betonzusammensetzung nach Anspruch 1, **dadurch gekennzeichnet, dass** der Sand Wesersand vorzugsweise mit einer Körnung von 0 bis 2 mm ist.

3. Betonzusammensetzung nach Anspruch 1 oder 2, **dadurch gekennzeichnet, dass** der Splitt Diabas Splitt ist.

4. Betonzusammensetzung nach einem der Ansprüche 1 bis 3, **dadurch gekennzeichnet, dass** der Splitt in zwei verschiedenen Körnungen, vorzugsweise einer ersten Körnung von 2 bis 8 mm und einer zweiten Körnung von 8 bis 16 mm, oder in drei verschiedenen Körnungen, vorzugsweise einer ersten Körnung von 2 bis 4 mm, einer zweiten Körnung von 4 bis 8 mm und einer dritten Körnung von 8 bis 16 mm, vorliegt.

5. Betonzusammensetzung nach den Anspruch 4, **gekennzeichnet durch** folgende jeweils auf einen m³ Frischbeton bezogene Bereichsangaben für den in unterschiedlichen Körnungen vorliegenden Splitt in Gewichtsanteilen:
| | |
|---|---|
| Diabas Splitt Körnung 2 bis 4 mm | 9 bis 13 Gew.-% |
| Diabas Splitt Körnung 4 bis 8 mm | 9 bis 13 Gew.-% |
| Diabas Splitt Körnung 8 bis 16 mm | 28 bis 32 Gew.-%. |

6. Betonzusammensetzung nach einem der vorhergehenden Ansprüche, **gekennzeichnet durch** folgende jeweils auf einen m³ Frischbeton bezogene Bestandteile:
| | |
|---|---|
| Wesersand | 29,01 Gew.-% |
| Diabas Splitt Körnung 2 bis 4 mm | 10,09 Gew.-% |
| Diabas Splitt Körnung 4 bis 8 mm | 10,63 Gew.-% |
| Diabas Splitt Körnung 8 bis 16 mm | 29,33 Gew.-% |
| Zement | 14,86 Gew.-% |
| Wasser | 4,69 Gew.-% |
| Colemanit | 0,78 Gew.-% |
| Betonverflüssiger | 0,06 Gew.-% |
| Erhärtungsbeschleuniger | 0,55 Gew.-%. |

7. Betonzusammensetzung nach einem der Ansprüche 1 bis 5, **gekennzeichnet durch** folgende jeweils auf einen m³ Frischbeton bezogene Bestandteile:
| | |
|---|---|
| Wesersand | 22,93 Gew.-% |
| Diabas Splitt Körnung 2 bis 4 mm | 11,47 Gew.-% |
| Diabas Splitt Körnung 4 bis 8 mm | 11,47 Gew.-% |
| Diabas Splitt Körnung 8 bis 16 mm | 30,58 Gew.-% |
| Zement | 18,17 Gew.-% |
| Wasser | 3,78 Gew.-% |
| Colemanit | 0,57 Gew.-% |
| Betonverflüssiger | 0,08 Gew.-% |
| Erhärtungsbeschleuniger | 0,95 Gew.-%. |

8. Verfahren zum Herstellen einer Betonzusammensetzung nach einem der vorhergehenden Ansprüche, **gekennzeichnet durch** folgende Schritte:
(a) Mischen von Sand, Splitt und Colemanit;
(b) Zugeben von Zement zu dem Gemisch gemäß Schritt (a); Mischen der Komponenten;
(c) Zugeben von Wasser und Betonverflüssiger zu dem Gemisch gemäß Schritt (b); Mischen der Komponenten;
(d) Zugeben von Erhärtungsbeschleuniger zu dem Gemisch gemäß Schritt (c); Mischen der Komponenten;
(e) sofortiges Verarbeiten des Gemisches gemäß Schritt (d).

9. Verfahren nach Anspruch 8, **dadurch gekennzeichnet, dass** die Mischzeit gemäß Schritt (a) etwa eine Minute und vorzugsweise die Mischzeit gemäß Schritt (b) etwa 1 bis 2 Minuten, die Mischzeit gemäß Schritt (c) etwa eine Minute und die Mischzeit gemäß Schritt (d) etwa 2 bis 3 Minuten beträgt.

10. Verfahren nach Anspruch 8 oder 9, **dadurch gekennzeichnet, dass** im Schritt (c) das Zugeben von Wasser gleichzeitig mit dem Zugeben von Betonverflüssiger erfolgt und die Mischzeit etwa 3 Minuten beträgt.

## Claims

1. Concrete composition for shielding from ionizing radiation, such as neutron radiation, containing sand, grit, cement, water, colemanite, a concrete plasticizer and a hardening accelerator,
with the following range specifications in weight fractions, in each case based on one m³ of fresh concrete:
| | |
|---|---|
| Sand | 20 to 32 wt.% |
| Grit | 46 to 58 wt.% |
| Cement | 12 to 20 wt.% |
| Water | 3 to 6 wt.% |
| Colemanite | 0.45 to 0.9 wt.% |
| Concrete plasticizer | 0.05 to 0.09 wt.% |
| Hardening accelerator | 0.4 to 1.1 wt.%. |

2. Concrete composition according to claim 1, **characterized in that** the sand is preferably Weser sand having a grain size of from 0 to 2 mm.

3. Concrete composition according to either claim 1 or claim 2, **characterized in that** the grit is diabase grit.

4. Concrete composition according to any of claims 1 to 3, **characterized in that** the grit comes in two different grain sizes, preferably a first grain size of from 2 to 8 mm and a second grain size of from 8 to 16 mm, or in three different grain sizes, preferably a first grain size of from 2 to 4 mm, a second grain size of from 4 to 8 mm and a third grain size of from 8 to 16 mm.

5. Concrete composition according to claim 4, **characterized by** the following range specifications in weight fractions, in each case based on one m³ of fresh concrete, for the grit present in different grain sizes:
**Diabase grit**
| | |
|---|---|
| Grain size 2 to 4 mm | 9 to 13 wt.% |
| Diabase grit Grain size 4 to 8 mm | 9 to 13 wt.% |
| Diabase grit Grain size 8 to 16 mm | 28 to 32 wt.%. |

6. Concrete composition according to any of the preceding claims, **characterized by** the following components, in each case based on one m³ of fresh concrete:
| | |
|---|---|
| Weser sand | 29.01 wt.% |
| Diabase grit Grain size 2 to 4 mm | 10.09 wt.% |
| Diabase grit Grain size 4 to 8 mm | 10.63 wt.% |
| Diabase grit Grain size 8 to 16 mm | 29.33 wt.% |
| Cement | 14.86 wt.% |
| Water | 4.69 wt.% |
| Colemanite | 0.78 wt.% |
| Concrete plasticizer | 0.06 wt.% |
| Hardening accelerator | 0.55 wt.%. |

7. Concrete composition according to any of claims 1 to 5, **characterized by** the following components, in each case based on one m³ of fresh concrete:
| | |
|---|---|
| Weser sand | 22.93 wt.% |
| Diabase grit Grain size 2 to 4 mm | 11.47 wt.% |
| Diabase grit Grain size 4 to 8 mm | 11.47 wt.% |
| Diabase grit Grain size 8 to 16 mm | 30.58 wt.% |
| Cement | 18.17 wt.% |
| Water | 3.78 wt.% |
| Colemanite | 0.57 wt.% |
| Concrete plasticizer | 0.08 wt. % |
| Hardening accelerator | 0.95 wt.%. |

8. Method for producing a concrete composition according to any of the preceding claims, **characterized by** the following steps:
(a) Mixing sand, grit and colemanite;
(b) Adding cement to the mixture according to step (a); mixing the components;
(c) Adding water and concrete plasticizer to the mixture according to step (b); mixing the components;
(d) Adding hardening accelerator to the mixture according to step (c); mixing the components;
(e) Immediate processing of the mixture according to step (d).

9. Method according to claim 8, **characterized in that** the mixing time according to step (a) is approximately one minute and preferably the mixing time according to step (b) is approximately 1 to 2 minutes, the mixing time according to step (c) is approximately one minute and the mixing time according to step (d) is approximately 2 to 3 minutes.

10. Method according to claim 8 or claim 9, **characterized in that**, in step (c), the addition of water takes place simultaneously with the addition of concrete plasticizer and the mixing time is approximately 3 minutes.

## Revendications

1. Composition de béton pour le blindage contre les rayonnements ionisants, tels que les rayonnements neutroniques, contenant du sable, des gravillons, du ciment, de l'eau, de la colémanite, un plastifiant pour béton et un accélérateur de durcissement,
avec les limites de plage suivantes en proportions pondérales, dans chaque cas par rapport à un m³ de béton frais :
| | |
|---|---|
| sable | 20 à 32 % en poids |
| gravillons | 46 à 58 % en poids |
| ciment | 12 à 20 % en poids |
| eau | 3 à 6 % en poids |
| colémanite | 0,45 à 0,9 % en poids |
| plastifiant pour béton | 0,05 à 0,09 % en poids |
| accélérateur de durcissement | 0,4 à 1,1 % en poids. |

2. Composition de béton selon la revendication 1, **caractérisée en ce que** le sable est du sable de la Weser, de préférence avec une granulométrie de 0 à 2 mm.

3. Composition de béton selon la revendication 1 ou 2, **caractérisée en ce que** les gravillons sont des gravillons de diabase.

4. Composition de béton selon l'une des revendications 1 à 3, **caractérisée en ce que** les gravillons sont présents en deux granulométries différentes, de préférence une première granulométrie de 2 à 8 mm et une deuxième granulométrie de 8 à 16 mm, ou en trois granulométries différentes, de préférence une première granulométrie de 2 à 4 mm, une deuxième granulométrie de 4 à 8 mm et une troisième granulométrie de 8 à 16 mm.

5. Composition de béton selon la revendication 4, **caractérisée par** les limites de plage suivantes en proportions pondérales, dans chaque cas par rapport à un m³ de béton frais, pour les gravillons présents en différentes granulométries :
| | |
|---|---|
| gravillons de diabase granulométrie de 2 à 4 mm | 9 à 13 % en poids |
| gravillons de diabase granulométrie de 4 à 8 mm | 9 à 13 % en poids |
| gravillons de diabase granulométrie de 8 à 16 mm | 28 à 32 % en poids. |

6. Composition de béton selon l'une des revendications précédentes, **caractérisée par** les constituants suivants, dans chaque cas par rapport à un m³ de béton frais :
| | |
|---|---|
| sable de la Weser | 29,01 % en poids |
| gravillons de diabase granulométrie de 2 à 4 mm | 10,09 % en poids |
| gravillons de diabase granulométrie de 4 à 8 mm | 10,63 % en poids |
| gravillons de diabase granulométrie de 8 à 16 mm | 29,33 % en poids |
| ciment | 14,86 % en poids |
| eau | 4,69 % en poids |
| colémanite | 0,78 % en poids |
| plastifiant pour béton | 0,06 % en poids |
| accélérateur de durcissement | 0,55 % en poids. |

7. Composition de béton selon l'une des revendications 1 à 5, **caractérisée par** les constituants suivants, dans chaque cas par rapport à un m³ de béton frais :
| | |
|---|---|
| sable de la Weser | 22,93 % en poids |
| gravillons de diabase granulométrie de 2 à 4 mm | 11,47 % en poids |
| gravillons de diabase granulométrie de 4 à 8 mm | 11,47 % en poids |
| gravillons de diabase granulométrie de 8 à 16 mm | 30,58 % en poids |
| ciment | 18,17 % en poids |
| eau | 3,78 % en poids |
| colémanite | 0,57 % en poids |
| plastifiant pour béton | 0,08 % en poids |
| accélérateur de durcissement | 0,95 % en poids. |

8. Procédé de préparation d'une composition de béton selon l'une des revendications précédentes, **caractérisé par** les étapes consistant à :
(a) mélanger du sable, des gravillons et de la colémanite ;
(b) ajouter du ciment au mélange selon l'étape (a) ; mélanger les composants ;
(c) ajouter de l'eau et un plastifiant pour béton au mélange selon l'étape
(b) ; mélanger les composants ;
(d) ajouter un accélérateur de durcissement au mélange selon l'étape
(c) ; mélanger les composants ;
(e) mettre en œuvre immédiatement le mélange selon l'étape (d).

9. Procédé selon la revendication 8, **caractérisé en ce que** le temps de mélange selon l'étape (a) est d'environ une minute et de préférence le temps de mélange selon l'étape (b) est d'environ 1 à 2 minutes, le temps de mélange selon l'étape (c) est d'environ une minute et le temps de mélange selon l'étape (d) est d'environ 2 à 3 minutes.

10. Procédé selon la revendication 8 ou 9, **caractérisé en ce qu'**à l'étape (c) l'ajout d'eau a lieu simultanément à l'ajout de plastifiant pour béton et le temps de mélange est d'environ 3 minutes.
